Europäisches Patentamt

European Patent Office

Office européen des brevets

(11) Publication number: **0 264 300 B1**

# EUROPEAN PATENT SPECIFICATION

(45) Date of publication of patent specification: **09.09.92**  (51) Int. Cl.⁵: **G03G 15/052**, G03B 27/54

(21) Application number: **87309184.7**

(22) Date of filing: **16.10.87**

(54) **Light source assembly for use with an electrophotographic copying apparatus.**

(30) Priority: **16.10.86 JP 159918/86**

(43) Date of publication of application:
**20.04.88 Bulletin 88/16**

(45) Publication of the grant of the patent:
**09.09.92 Bulletin 92/37**

(84) Designated Contracting States:
**AT BE CH DE ES FR GB IT LI LU NL SE**

(56) References cited:
FR-A- 2 443 020
GB-A- 1 533 870
US-A- 4 171 905

**IBM TECHNICAL DISCLOSURE BULLETIN, vol. 20, no. 2, July 1977, pages 488-489, New York, US; R.A. MADDOX et al.: "Copier illumination system"**

**XEROX DISCLOSURE JOURNAL, vol. 8, no. 2, March/April 1983, pages 147-148, Stamford, US; J.J. APPEL: "Plastic attenuators for lamp adjustment and axial profile shaping"**

(73) Proprietor: **NORITSU KOKI CO. LTD**
**579-1 Umehara**
**Wakayama-shi Wakayama(JP)**

Proprietor: **ISHIHARA SANGYO KAISHA, LTD.**
**No. 3-22, Edobori 1-chome**
**Nishi-ku Osaka(JP)**

(72) Inventor: **Murakami, Hajime**
**460-19 Kawara-cho**
**Kusatsu-shi Shiga(JP)**
Inventor: **Takenouchi, Tooru**
**142, Shinnakajima**
**Wakayama-shi Wakayama(JP)**
Inventor: **Ikeura, Hiroo**
**937-14 Uchihara**
**Wakayama-shi Wakayama(JP)**

(74) Representative: **Beresford, Keith Denis Lewis et al**
**BERESFORD & Co. 2-5 Warwick Court High Holborn**
**London WC1R 5DJ(GB)**

EP 0 264 300 B1

## Description

The present invention relates to a light source assembly for use with an electrophotographic copying apparatus for forming toner image on a photosensitive object.

In general, the electrophotographic process comprises the steps of, during the movement of a photosensitive object having a photoconductive layer on its surface, uniformly charging and then imagewise exposing the object to form an electrostatic latent image thereon, and developing electrostatic latent images with a developer containing toner particles.

In the imagewise exposing step for the electrophotographic process, the most often used is what is called the scanning exposure method, in which during the movement of the photosensitive object, either a light source and a focusing lens or the original to be copied is moved synchronously with the movement of the photosensitive object.

However, this method has a drawback that the image formed tends to blur due to difficulty of exact synchronization of movements between the movement of the photosensitive object and either the movement of the light source and the focusing lens or the movement of the original to be copied, thus making it difficult to produce a sharp and high-resolution image. Especially in color electrophotography in which scanning exposures are repeated a plurality of times to form a multi-color image, the above said problem is serious and the solution has been acutely hoped.

An example of the prior art is disclosed in US 4,171,905. In this prior art specification a butterfly slit is used the aperture of which is increased at both ends of the scan movement by means of a cam mechanism. By this means all peripheral portions of the original are given a greater amount of exposure.

In order to obtain a high quality image, the inventors took notice of the fact that the stationary exposure in which only the light source arranged near an original support is moved, while keeping stationary the original, the lens assembly and the photosensitive object, is possible without substantially increasing the power of the light source. As a result, we succeeded in solving the abovesaid resolution problem. But, another problem was left unsolved, namely a fogging at a peripheral portion resulting from an uneven distribution of light over the photosensitive object. This problem was particularly remarkable if a luminescent lamp such as a xenon lamp, a metal halide lamp or a fluorescent lamp is used as the light source.

It is an object of the present invention to provide a light source assembly for use with an electrophotographic copying apparatus which assures a uniform distribution of light over the surface of a photosensitive object in a rather simple manner to provide a high-quality image, in case the distribution of the intensity of illumination on the surface of the original is low at the peripheral portion.

According to the present invention, a light source assembly for use in an electrophotographic copying apparatus, comprises a lamp unit having a lamp and a slit for illuminating through the slit an original mounted on an original support, while said lamp unit is being driven from one end of the original support to the other end in parallel with the original support, light reflected by the original being directed through a lens onto the surface of a photosensitive object to form an image thereon, said slit having a width which is the narrowest at the center thereof and gradually widens toward both ends thereof, characterised by means arranged to drive said lamp unit at a controlled speed which is the highest at the center of the original support and is the lower as said lamp unit gets the closer to both ends of the original support.

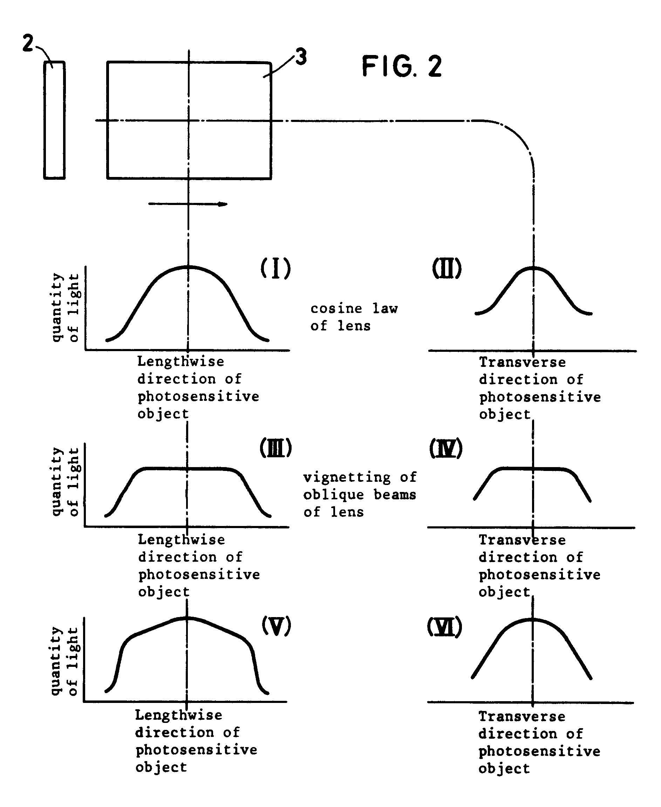

Now it will be described in more detail how lights are distributed over the photosensitive object during the movement of a slit formed in a lamp unit, with reference to Fig. 2.

If a lamp unit A formed with a rectangular slit 2 for restricting the amount of light is moved over an original support 3 from one end thereof to the other end as shown by an arrow in Fig. 2 at a constant speed, the distribution of light is as shown in Figs. 2(I) through 2(IV), in which Figs. 2(I) and 2(II) show light distribution according to the cosine law, while Figs. 2(III) and 2(IV) show light distribution due to the vignetting of oblique beams through the lens. Fig. 2(V) is a curve obtained by combining the distribution curve of Fig. 2(I) with that of Fig. 2(III), showing the distribution of light in the direction of movement of the slit. Similarly, Fig. 2(VI) is a curve obtained by combining the distribution curve of Fig. 2(II) with that of Fig. 2(IV), showing the distribution of light in the direction perpendicular to the direction of movement of the slit.

As is apparent from the graph of Fig. 2(V), the amount of light is low at the beginning and the end of travel of the slit. Also as shown in the graph of Fig. 2(IV), the amount of light is low at both sides of the slit in a direction perpendicular to the movement of the slit 2. Thus, as a whole, the photosensitive object is exposed to a smaller amount of light at its peripheral portion.

If the amount of light shed through the slit on the original support is increased at the peripheral portion of the original support as in the present invention to compensate for such uneven distribution as described above, the distribution of light will be flattened over the photosensitive object.

The present invention makes it possible to make uniform the distribution of light over the surface of a photo-sensitive object without the need of adjusting the distribution of light by use of a special means in the light source lamp or without incurring any increase in the capacity of light source. Thus with the aid of a light source assembly according to this invention, a sharp and high-resolution copy without any blurring or fogging on the peripheral portion will be obtained. Also, this invention will be conveniently applied to color electrophotography in which a photosensitive object is exposed to light a plurality of times to form a multi-color image of good pictorial quality, especially, if titanium dioxide is used as photoconductive layer in the photo-sensitive material sheet for a CPC (coated paper copier) system electrophotography.

Other features and objects of the present invention will become apparent from the following description taken with reference to the accompanying drawings, in which:

Fig. 1 is a perspective view of one embodiment of the light source assembly in accordance with the present invention;

Figs. 2(I) to 2(VI) are graphs showing light distribution over the surface of a photosensitive object with a lamp unit formed with a rectangular slit; and

Fig. 3 is a schematic view of an electrophotographic copying apparatus provided with the light source assembly of the present invention.

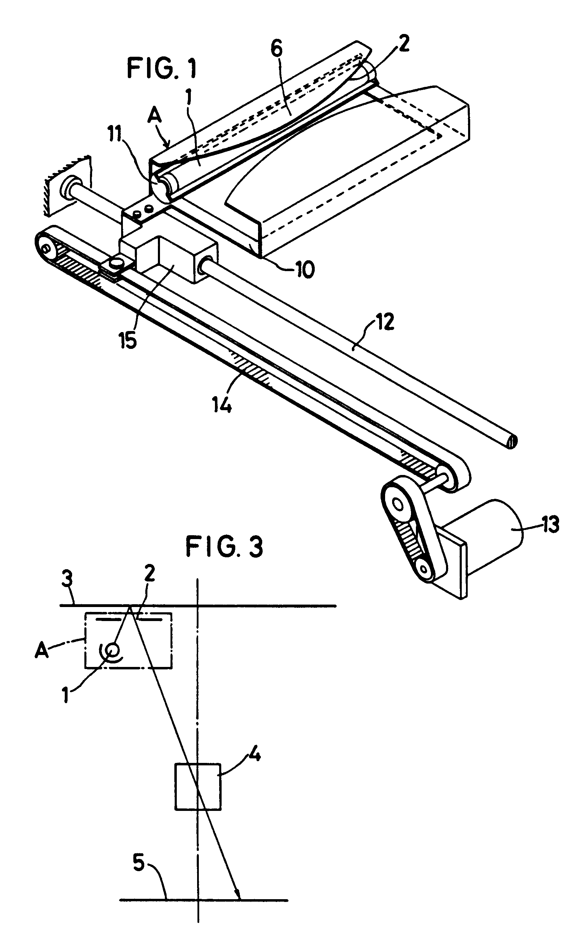

Referring to the drawings, Fig. 1 shows a lamp unit A comprising a carrier 10 and a light reflector 11 and a lamp 1 supported on the carrier 10. The lamp 1 has a length substantially equal to the width of an original support 3 shown in Fig. 3. The light from the lamp 1 passes through a slit 2 formed in a light shield 6 over the lamp so as to be shed on the original support 3.

The slit 2 is elongated along the lamp 1 with its width gradually widening from the center toward both ends.

The lamp unit A is movable along a guide rod 12 provided below the original support 3, driven by a pulse motor 13, from one end of the original support 3 to the other end. The lamp unit A is adapted to be accelerated on its way from the starting point toward the midpoint of the original support 3 and be decelerated thereafter toward the other end. This means that the lamp unit A is speed controlled so as to move fastest at the center of the original support 3 and the closer it comes to either end, the slower the speed.

In the preferred embodiment, the pulse motor 13 is used to drive an endless timing belt 14 which has one portion thereof coupled to a slide member 15 slidable along the guide rod 12. The slide member 15 is in turn coupled to the lamp unit A to drive the latter. But, it is to be understood that driving mechanisms of any other type may be used.

Since the lamp unit A is formed with the slit 2 having its central portion narrowed so that its width will gradually widen toward both ends, the amount of light radiated from the lamp 1 through the slit 2 on to the original support 3 is the least at its central portion in the direction of width and gradually increases toward both sides thereof. The distribution of light reflected by the support 3 and passed through a lens 4 is uniform over a photosensitive object 5 with respect to a direction perpendicular to the movement of the lamp unit because of the vignetting of oblique beams of lens and the cosine law.

Also since the lamp unit travels fastest at the center of the original support 3 and slower as it is closer to either end, the surface of an original support is exposed to the largest amount of light at both ends while exposed to the least amount at the center. Thus the light reflected by the original support 3 and passed through the lens 4 is distributed uniformly over the photosensitive object 5 with respect to the direction of travel of the lamp unit, too, because of the vignetting of oblique beams through the lens and the cosine law.

The distribution of the amount of light directed onto the photosensitive object 5 is uniform with respect to the direction of travel of the lamp unit as well as to the direction perpendicular to that of travel. Thus, since the surface of the photosensitive object 5 is irradiated with light evenly all over its surface, a clear image can be formed thereon by electrophotographic process.

## Claims

1. A light source assembly for use in an electrophotographic copying apparatus, comprising: a lamp unit (A) having a lamp (1) and a slit (2) for illuminating through the slit an original mounted on an original support (3), while said lamp unit is being driven from one end of the original support to the other end in parallel with the original support, light reflected by the original being directed through a lens (4) onto the surface of a photosensitive object (5) to form an image thereon, said slit having a width which is the narrowest at the center thereof and gradually widens toward both ends thereof, characterised by means arranged to drive said lamp unit (A) at a controlled speed which is the highest at the center of the original support and is the lower as said lamp unit gets the closer to both ends of the original support.

2. A light source assembly as claimed in claim 1, wherein said lamp unit (A) is driven by a pulse motor (13) through an endless timing belt (14) having one portion thereof coupled to a slide member (15) slidable along a guide rod (12), said slide member being coupled to said lamp unit.

3. An electrophotographic copying apparatus, comprising a light source assembly according to claim 1 or 2.

**Patentansprüche**

1. Beleuchtungseinrichtung zur Verwendung in einem elektrofotografischen Kopiergerät bestehend aus:
Einer Lampenbaueinheit A mit einer Lampe (1) und einem Schlitz (2) zur Beleuchtung einer Vorlage, die auf einem Vorlagenträger (3) angeordnet ist, durch den Schlitz, während die Lampenbaueinheit vom einen Ende des Vorlagenträgers zum anderen Ende parallel zum Vorlagenträger angetrieben wird, wobei das an der Vorlage reflektierte Licht durch eine Linse 4 auf die Oberfläche eines lichtempfindlichen Gegenstandes 5 gerichtet wird, um auf diesem ein Bild zu erzeugen, wobei der Schlitz eine Breite aufweist, die in der Mitte am engsten ist und sich zu den beiden Enden desselben hin allmählich erweitert,
**gekennzeichnet** durch eine Einrichtung zum Antreiben der Lampenbaueinheit A mit einer gesteuerten Geschwindigkeit, die in der Mitte des Vorlagenträgers am größten ist und umso niedriger wird, je näher die Lampenbaueinheit an die beiden Enden des Vorlagenträgers kommt.

2. Beleuchtungseinrichtung nach Anspruch 1, wobei die Lampenbaueinheit A durch einen Impulsmotor (13) über einen Endlos-Zeitschalt-Gurt (14) angetrieben wird, wobei ein Teil des Gurtes mit einem Gleitelement (15) gekoppelt ist, welches entlang einer Führungsstange (12) gleiten kann, und an die Lampenbaueinheit gekoppelt ist.

3. Elektrofotografisches Kopiergerät mit einer Beleuchtungseinrichtung gemäß Anspruch 1 oder 2.

**Revendications**

1. Ensemble d'éclairage utilisable dans un appareil de copie électrophotographique, qui comprend : une unité d'éclairage (A) comportant une lampe (1) et une fente (2) pour éclairer, à travers la lente, un original placé sur un support d'original (3), tandis que la dite unité d'éclairage est entraînée d'une extrémité du support d'original à l'autre extrémité parallèlement au support d'original, la lumière réfléchie par l'original étant dirigée à travers une lentille (4) sur la surface d'un objet photosensible (5) pour former une image sur cette surface, ladite lente ayant une largeur qui est la plus faible au centre de la lente et qui augmente progressivement vers ses deux extrémités, caractérisé en ce que des moyens sont prévus pour entraîner ladite unité d'éclairage (A) à une vitesse réglée qui est maximale au centre du support d'original et qui diminue lorsque ladite unité d'éclairage se rapproche des deux extrémités du support d'original.

2. Ensemble d'éclairage suivant la revendication 1, dans lequel ladite unité d'éclairage (A) est entraînée par un moteur à impulsions (13) par l'intermédiaire d'une courroie sans fin de synchronisation (14) dont une partie est reliée à un coulisseau (15) qui peut coulisser le long d'une tige de guidage (12), ledit coulisseau étant relié à ladite unité d'éclairage.

3. Appareil de copie électrophotographique, comprenant un ensemble d'éclairage suivant la revendication 1 ou 2.

FIG. 1

FIG. 3

# FIG. 2

(I) cosine law of lens

quantity of light

Lengthwise direction of photosensitive object

(II)

Transverse direction of photosensitive object

(III) vignetting of oblique beams of lens

quantity of light

Lengthwise direction of photosensitive object

(IV)

Transverse direction of photosensitive object

(V)

quantity of light

Lengthwise direction of photosensitive object

(VI)

Transverse direction of photosensitive object